Europäisches Patentamt

European Patent Office

Office européen des brevets

(19)

(11) EP 0 848 830 B1

(12) **EUROPÄISCHE PATENTSCHRIFT**

(45) Veröffentlichungstag und Bekanntmachung des Hinweises auf die Patenterteilung:
**19.05.1999 Patentblatt 1999/20**

(21) Anmeldenummer: **96937999.9**

(22) Anmeldetag: **06.09.1996**

(51) Int Cl.⁶: **G01S 13/34**

(86) Internationale Anmeldenummer:
**PCT/DE96/01675**

(87) Internationale Veröffentlichungsnummer:
**WO 97/09638 (13.03.1997 Gazette 1997/12)**

(54) **VORRICHTUNG ZUR ABSTANDSMESSUNG**

RANGEFINDER

DISPOSITIF DE TELEMETRIE

(84) Benannte Vertragsstaaten:
**DE FR GB NL**

(30) Priorität: **07.09.1995 DE 19533122**

(43) Veröffentlichungstag der Anmeldung:
**24.06.1998 Patentblatt 1998/26**

(73) Patentinhaber: **SIEMENS AKTIENGESELLSCHAFT**
**80333 München (DE)**

(72) Erfinder:
- **MAGORI, Valentin**
  **D-81539 München (DE)**
- **HEIDE, Patric**
  **D-81371 München (DE)**

(56) Entgegenhaltungen:
**US-A- 4 895 441**

**Beschreibung**

Die Erfindung betrifft eine Vorrichtung zur Abstandsmessung.

Aus dem Stand der Technik Meinke, Gundlach, Taschenbuch der Hochfrequenztechnik, 5. Aufl., Springer-Verlag, Seite S3-S4 ist ein Dauerstrichradar, das auch als FM-CW-Radar bezeichnet wird, bekannt. FM steht für Frequenzmodulation und CW für Continuous Wave. Ein derartiges Dauerstrichradar sendet kontinuierlich ein Radarsignal aus, dessen Frequenz durch die Frequenzmodulation fortlaufend geändert wird. Das an einem Objekt reflektierte Radarsignal trifft nach der Signallaufzeit $t_L$

$$t_L = \frac{2L}{c}$$

wobei

c = Ausbreitungsgeschwindigkeit des Radarsignals,
L = Abstand des Dauerstrichradars vom Objekt,

am Radarsensor ein und wird dort mit der gerade vorliegenden Sendefrequenz verglichen, welche inzwischen durch die Frequenzmodulation verändert worden ist. Das Radarsignal, das beispielsweise zum Zeitpunkt $t_1$ mit der Frequenz $f(t_1)$ ausgesendet worden ist, wird zum Zeitpunkt seiner Rückkehr $t_2 = t_1 + t_L$ mit dem Sendesignal mit der Frequenz $f(t_2)$ verglichen. Der Vergleich der beiden Signale erfolgt durch einen Mischer. Am Ausgang des Mischers erhält man die Mischfrequenz $\Delta f$ der beiden Signale:

$$\Delta f = f(t_2) - f(t_1) = f(t_1 + t_L) - f(t_1)$$

Die Mischfrequenz $\Delta f$ ist proportional zum Abstand L zwischen Objekt und Sensor. Damit bei gegebenem, bestem Objektabstand L die Mischfrequenz $\Delta f$ während eines Zeitintervalls konstant bleibt, ist es nötig, daß die Frequenzmodulation mit dem jeweiligen Intervall über die Zeit linear ist, d.h. daß die Frequenz linear mit der Zeit zu- oder abnimmt:

$$f(t+\Delta t) = f_0 + \alpha \cdot \Delta t$$

wobei

$\alpha$ = df/dt = konstant
$f_0$ = Grundfrequenz.

Als modulierendes Signal kommt vorzugsweise eine dreiecksförmige Schwingung in Betracht.

Bei einer komplexen Auswertung der Mischfrequenz $\Delta f$, d.h. des sogenannten FM-Dopplersignals, ergeben sich, je nach ansteigender oder abfallender Augenblicksfrequenz, positive oder negative entfernungsproportionale Frequenzen, welche von geschwindigkeitsproportionalen Frequenzen, die durch eine Bewegung des Objekts entstehen, unterschieden werden können.

Probleme ergeben sich bei der Messung weit entfernter Objekte durch die beschränkte Kohärenzlänge des Sendesignals. Das heißt, auch wenn die Frequenzmodulation des Sendesignals exakt zeitlinear ist, so sind dem Sendesignal statistische Phasen- und Frequenzschwankungen $f_R(t)$ überlagert:

$$f(t+\Delta t) = f_0 + \alpha \Delta t + f_R(t)$$

Derartige Schwankungen resultieren aus dem Phasenrauschen des Sendeoszillators. Das bedeutet, daß zwischen zwei Zeitpunkten die Phase des Empfangssignals vom erwarteten Wert um einen bestimmten Wert abweichen kann, der umso größer ist, je stärker das Phasenrauschen des Oszillators ist und je größer der Abstand zwischen den beiden Zeitpunkten ist. Dies hat zur Folge, daß es in Abhängigkeit vom Phasenrauschen der Signalquelle eine Zeitdauer gibt, von der an die Phasendifferenz so stark fluktuiert, daß kein vernünftiger Meßwert mehr ermittelt werden kann. Die dieser Zeitdauer entsprechende Lauflänge des Mikrowellensignals (= Radarsignal) wird als Kohärenzlänge bezeichnet. Bei Objektabständen, bei welchen die Signallauflänge größer als die Kohärenzlänge ist, ist die Abstandsmessung stark erschwert, wenn nicht unmöglich.

Das Problem kann dadurch gelöst werden, daß der Sender mit einem sehr phasenrauscharmen Oszillator ausgestattet wird. Dies bedeutet eine große Kohärenzlänge. Die Herstellung eines solchen Oszillators verlangt jedoch die Verwendung kostspieliger Komponenten.

In der US 4,895,441 ist eine Vorrichtung zur Abstandsmessung beschrieben, bei der eine Signalquelle vorgesehen ist, die ein frequenzmoduliertes Signal erzeugt, bei der eine Sende-Empfangseinheit vorgesehen ist, die mit der Signalquelle verbunden ist, und bei der ein Mischer vorgesehen ist zum Mischen des empfangenen Signals mit dem frequenzmodulierten Signal. Bei dieser Vorrichtung wird eine Signalquelle verwendet, die eine relativ hohe Frequenz und eine vorgegeben lange Kohärenzlänge im Vergleich zum zu messenden Abstand aufweist.

Abstandsmesser mit FM-CW-Radar sind auch beschrieben in US 4,205,316 und 4,360,812.

Die Aufgabe der Erfindung ist es, eine Vorrichtung zur Abstandsmessung mit verbesserter Kohärenzlänge anzugeben.

Die Aufgabe wird durch eine Vorrichtung gemäß den Patentansprüchen 1 oder 2 gelöst.

Vorteilhafte Weiterbildungen der Erfindung ergeben sich aus den Unteransprüchen.

Wenn die Isolation der Sende-/Empfangsweiche zu niedrig ist, kann eine bistatische Antennenanordnung vorgesehen sein. Die Sende-/Empfangsweiche kann beispielsweise einen Zirkulator oder einen Richtkoppler aufweisen. Falls vermieden werden soll, daß die Sendeleistung unkontrolliert auf den Mischer überkoppelt, kann die Sende-/Empfangsweiche zwischen die Signalquelle, den Mischer und die Antenne geschaltet werden.

Die Erfindung wird im folgenden anhand mehrerer Figuren näher erläutert. Es zeigt:

Figur 1    den prinzipiellen Aufbau der erfindungsgemäßen Vorrichtung zur Abstandsmessung,

Figur 2    ein Entfernungsdiagramm mit n verschiedenen Entfernungsfenstern,

Figur 3    zwei verschiedene Ausgestaltungsformen eines Oberflächenwellenelements,

Figur 4    eine weitere Ausgestaltungsform der erfindungsgemäßen Vorrichtung zur Abstandsmessung,

Figur 5    eine weitere Ausgestaltungsform der erfindungsgemäßen Vorrichtung zur Abstandsmessung,

Figur 6    einen Frequenzumsetzer, wie er für die Vorrichtungen gemäß Figur 1 oder Figur 4 geeignet ist, und

Figur 7    eine Sendeempfangseinheit, wie sie für die Vorrichtungen zur Abstandsmessung gemäß Figur 1, Figur 4 oder Figur 5a geeignet ist.

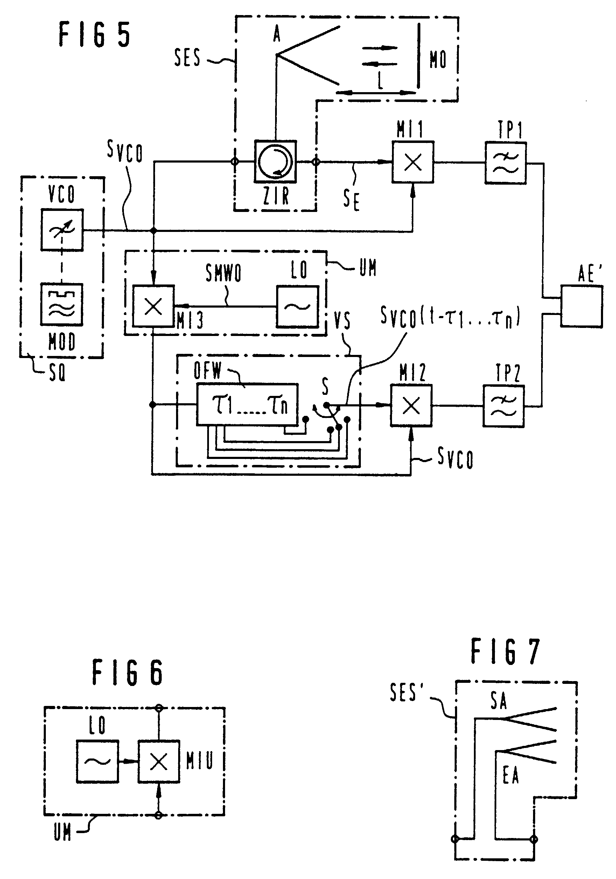

Die erfindungsgemaße Vorrichtung zur Abstandsmessung mit verbesserter Kohärenzlänge weist einen Signalgenerator SQ auf, der ein frequenzmoduliertes Signal $S_{VCO}$ mit der Frequenz $f_{VCO}(t)$ erzeugt. Sofern der Umsetzer UM gemäß Figur 6 nicht zwischen die Signalquelle SQ und die Sendeempfangseinheit SES geschaltet wird, gilt:

$$f_{VCO}(t) = f_T(t)$$

$$S_{VCO} = S_S$$

wobei

$f_T(t)$ = Augenblicksfrequenz des Sendesignals $S_S$ oder auch Sendefrequenz genannt

Zum Zeitpunkt $t_1$ wird das Sendesignal $S_S$ mit der Augenblicksfrequenz $f_T(t)$ über den Zirkulator ZIR, der Bestandteil der Sendeempfangseinheit SES ist, an die Antenne A geleitet. Diese strahlt das Sendesignal $S_S$ ab. Am Meßobjekt MO, welches sich in einem Abstand L von der Antenne A entfernt befindet, wird das ausgesandte Signal reflektiert und von der Antenne A empfangen. Der Zirkulator ZIR sorgt dafür, daß das zum Zeitpunkt $t_2 = t_1 + t_L$ empfangene Signal $S_E$ mit der Frequenz $f_T(t_1)$ an den Mischer MI gelangt. Weiterhin wird zum Zeitpunkt $t_1$ das von der Signalquelle SQ stammende frequenzmodulierte Signal mit der Frequenz $f_{VCO}(t_1)$ auf ein Oberflächenwellenelement OFW, das eine Verzögerungsdauer $\tau$ aufweist, geführt. Das somit um die Verzögerungsdauer $\tau$ verzögerte frequenzmodulierte Signal $S_{VCO}$ wird zum Zeitpunkt $t_2$ mittels des Mischers MI mit dem zum Zeitpunkt $t_2$ empfangenen Signal $S_E$ gemischt, mittels einem Tiefpaß TP gefiltert und einer Auswerteeinheit AE zugeführt. Der Tiefpaß TP kann ggf. weggelassen sein.

Die Verzögerungsdauer $\tau$ ist so bemessen, daß die Differenz zwischen der Verzögerungsdauer $\tau$ und der Signallaufzeit $t_L$ kleiner oder höchstens gleich der Kohärenzzeitdauer $t_K$ ist, welche proportional der Kohärenzlänge ist:

$$|\tau - t_L| \leq t_K \quad \text{(Kohärenzbedingung)}$$

Mit bekannter Verzögerungsdauer $\tau$ und bekanntem Frequenzhub $\alpha$ läßt sich somit die Signallaufzeit $t_L$ der Meßstrecke zu:

$$t_L = \tau \pm \Delta f/\alpha$$

berechnen. Der Abstand L des Meßobjekts MO von der Antenne A ergibt sich aus der halben Länge der Meßstrecke und somit aus der halben Signallaufzeit $t_L$.

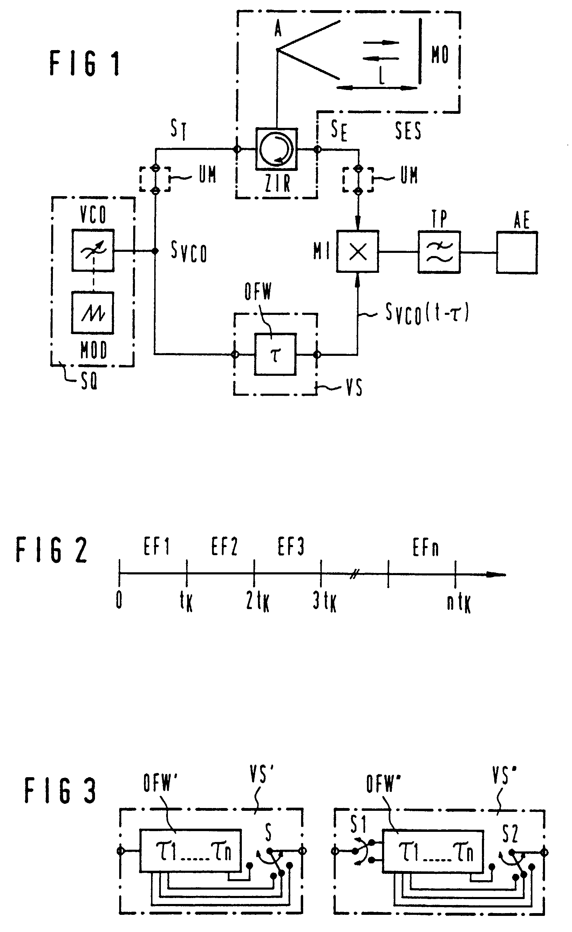

Durch die Verwendung eines Oberflächenbauelements OFW in der oben erörterten Weise kann der durch die beschränkte Kohärenzlänge in seiner Breite eingeschränkte nutzbare Entfernungsbereich, auch als Entfernungsmeßfenster EF bezeichnet, durch die Wahl der Verzögerungsdauer $\tau$ beliebig verschoben werden. Dies entspricht einer Fokussierung der Messung auf ein wählbares Entfernungsmeßfenster EF1...EFn (vgl. Figur 2). Die Breite eines Entfernungsfensters ist nach wie vor durch die Koharenzzeitdauer $t_K$ des Radarsignals vorgegeben.

Die OFW-Laufzeitleitung führt das verzögerte Signal intern als akustische Oberflächenwelle, dessen Ausbreitungsgeschwindigkeit um Größenordnungen unter der der Lichtgeschwindigkeit liegt, so daß die erforderliche Zeitverzögerung $\tau$ in einem extrem kleinen Bauelement realisiert wird.

Um einen größeren Meßbereich abzudecken, sind mehrere Entfernungsmeßfenster EF1, EF2,..., EFn und somit mehrere Verzögerungsleitungen mit unterschiedlichen Verzögerungsdauern $\tau_1 ... \tau_n$ erforderlich.

Eine Realisierung kann wie in Figur 3 dargestellt aussehen. Die Verzögerungsstrecke VS mit dem Oberflächenwellenelement OFW in Figur 1 wird durch eine Verzögerungsstrecke VS' mit einem Oberflächenwellenelement OFW' in Verbindung mit einem Umschalter S oder durch eine Verzögerungsstrecke VS" mit einem Oberflächenwellenelement OFW'" in Verbindung mit zwei Umschaltern S1 und S2 ersetzt. Je nach gewünschtem Entfernungsmeßfenster wird der Umschalter S bzw. werden die Umschalter S1 und S2 auf die entsprechende Verzögerungsdauer eingestellt.

Die Verzögerungszeiten zwischen der Einspeisung und jeder Anzapfung der Oberflächenwellenelemente OFW, OFW' und OFW" sind genau bekannt. Von jeder Anzapfung kann das Mischsignal zwischen dem auf der Meßstrecke verzögerten Sendesignal und dem auf der Verzögerungsstrecke VS, VS' oder VS" verzögerten frequenzmodulierten Signal $S_{VCO}$ gebildet werden. Als Laufzeitleitung wird jeweils der Abschnitt des angezapften Oberflächenwellenelements OFW, OFW' oder OFW" gewählt, dessen Verzögerung der Meßstrecke hinsichtlich der Signallaufzeit $t_L$ am nächsten kommt.

Befinden sich mehrere Objekte auf der Meßstrecke, sind also mehrere Abstände gleichzeitig zu messen, so werden die Laufzeitleitungen nacheinander an die verschiedenen Abstände angepaßt. Die Signale der verschiedenen Anzapfungen der Oberflächenwellenelemente OFW', OFW" können, wie in Figur 3 dargestellt, mit einem Umschalter S bzw. zwei Umschaltern S1, S2 sequentiell mit dem Mischer MI verbunden werden.

Ebenso kann jede Anzapfung über einen eigenen Mischer verfügen, wobei alle Mischsignale parallel zur Auswerteeinheit AE geführt werden (in den Figuren nicht dargestellt).

Die Entfernung ergibt sich aus der gemessenen Signallaufzeit $t_L$, für welche gilt:

$$t_L = \tau_n \pm \Delta t = \tau_n \pm \Delta f_n / \alpha$$

wobei

$\tau_n$ = Verzögerungsdauer der n-ten Anzapfung und
$\Delta f_n$ = die an der n-ten Anzapfung meßbare Mischfrequenz.

Für die Signallaufzeit $t_L$ auf der Meßstrecke ergibt sich eine Mehrdeutigkeit, welche aus der Unsicherheit darüber zustande kommt, ob das Echo oder das Verzögerungssignal eine kürzere oder längere Laufzeit hatte. Diese Unsicherheit kann wie folgt ausgeräumt werden:

1. Möglichkeit:

Die Signalauswertung erfolgt komplex durch Verwendung eines IQ-Mischers.

2. Möglichkeit:

Es erfolgt eine Variation der Verzögerungsdauer, beispielsweise durch Umschaltung unterschiedlicher Eingangswandler der Laufzeitleitung, wie bei der Verzögerungsstrecke VS" gemäß Figur 3 rechts gezeigt, durch welche die Verzögerungsdauer innerhalb kleiner Grenzen vergrößert oder verkleinert werden kann. Sowohl bei einer Vergrößerung als auch bei einer Verkleinerung der Verzögerungsdauer ist dasjenige Vorzeichen richtig, welches bei einer Änderung der Verzögerungsdauer jeweils die richtige Veranderung der Signallaufzeit $t_L$ ergibt.

Die Signalquelle SQ beinhaltet einen Modulator MOD, der mit einem vorzugsweise dreiecksförmigen Signal einen spannungsgesteuerten Oszillator VCO ansteuert. Dieser liefert am Ausgang ein frequenzmoduliertes Signal $S_{VCO}$. Der Modulator MOD erzeugt das modulierende Signal.

In die Vorrichtung zur Abstandsmessung gemäß Figur 1 kann der Umsetzer UM gemäß Figur 6 an den in Figur 1 gekennzeichneten Stellen eingesetzt werden. Der Umsetzer UM weist einen lokalen Oszillator LO auf, der ein Signal $S_{LO}$ mit einer Frequenz $f_{LO}$ erzeugt, die über der Frequenz $f_{VCO}(t)$ liegt, die die Signalquelle SQ erzeugt. Mit dem Umsetzer UM wird die Frequenz $f_{VCO}(t)$ des Signals $S_{VCO}$ auf das Sendesignal $S_S$ mit der Augenblicksfrequenz $f_T(t)$ hochgemischt. Dies hat den Vorteil, daß ein Teil der Sensorkomponenten in einem bezogen auf die Sendefrequenz niederfrequenteren Bereich betrieben werden kann. Dieser ist in der Praxis handhabbarer.

Mittels eines zweiten Umsetzers wird das empfangene Signal $S_E$ mit dem von lokalen Oszillator LO stammenden Signal $S_{LO}$ herabgemischt. Damit liegen am Mischer MI oder MI1 wieder zwei Signale im Basisfrequenzband an.

Es genügt ein lokaler Oszillator LO zum Hoch- bzw. Herabmischen der Signale.

Die bistatische Sendeempfangseinheit SES' gemäß Figur 7 kann die monostatische Sendeeinheit SES gemäß Figur 1 ersetzen. Die bistatische Sendeempfangseinheit SES' hat den Vorteil einer höheren Isolation gegenüber dem Zirkulator ZIR der mono-statischen Empfangseinheit SES. Bei der bistatischen Sendeempfangseinheit SES' ist eine Sendeantennne SA und eine Empfangsantenne EA notwendig.

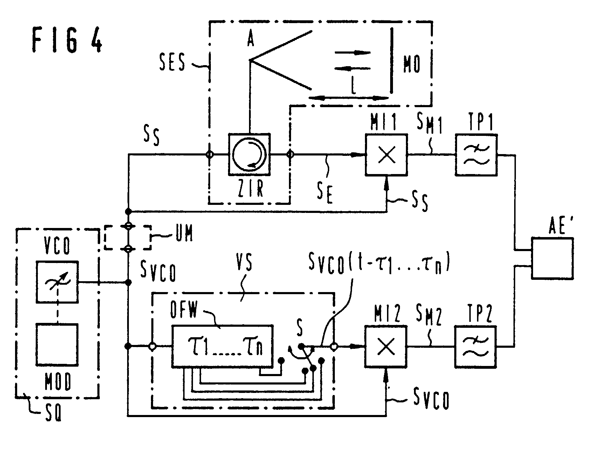

Die Vorrichtung zur Abstandsmessung gemäß Figur 4 unterscheidet sich von der Vorrichtung zur Abstandsmessung gemäß Figur 1 dadurch, daß das Empfangssignal $S_E$ mit dem Sendesignal $S_S$ gemischt wird und das verzögerte Signal $S_{VCO}(t\text{-}\tau_1...\tau_n)$ mit dem unverzögerten, von der Signalquelle SQ stammenden Signal $S_{VCO}$ gemischt wird. Die Ausgänge der Mischer MI1 und MI2 sind über zwei optionale Tiefpässe TP1 und TP2 auf eine gemeinsame Auswerteeinheit AE' geführt. Die beiden von den Mischern MI1 und MI2 stammenden Mischsignale $S_{M1}$ und $S_{M2}$ werden in der Auswerteeinheit AE' durch eine entsprechende Software ausgewertet. Die Auswerteeinheit AE' ermittelt, welche momentane Phase auf der entsprechenden Anzapfung der Verzögerungsstrekke VS gerade anliegt und welche momentan bei der gegebenen Verzögerungsdauer der Verzögerungsstrecke VS bzw. eines Abgriffs zu erwarten wäre. Aus diesen beiden Werten wird eine Korrektur berechnet, welche innerhalb der Kohärenzlänge auch mit guter Wahrscheinlichkeit für die Meßstrecke gilt.

Die erfindungsgemäße Vorrichtung zur Abstandsmessung gemäß Figur 4 kann durch einen Umsetzer UM gemäß Figur 6 an der in Figur 4 gezeichneten Stelle ergänzt werden. Wie bereits weiter oben beschrieben, hat dies den Vorteil, daß ein Teil der Sensorkomponenten in einem bezogen auf die Sendefrequenz niederfrequenteren Bereich betrieben werden kann.

Die Vorrichtung zur Abstansmessung gemäß Figur 5a unterscheidet sich von der Vorrichtung zur Abstansmessung gemäß Figur 4 dadurch, daß zwischen das Oberflächenwellenelement OFW und der Signalquelle SQ ein zusätzlicher Mischer MI3 angeordnet ist, mit dem das frequenzmodulierte Signal $S_{VCO}$ mittels eines Lokaloszillators LO in einen zur Weiterverarbeitung mit einem Oberflachenwellenelement geeigneten Zwischenfrequenzbereich herabgemischt wird.

Der Mischer MI3 kann sowohl als Grundwellenmischer als auch als sogenannter harmonischer Mischer ausgebildet sein. Die Verwendung eines harmonischen Mischers hat den Vorteil, daß die Frequenz des Lokaloszillators LO niedriger gewählt werden kann, so daß der Lokaloszillator LO kostengünstiger realisierbar ist.

Auch bei den in Figur 4 und 5a gezeigten Vorrichtungen zur Abstandsmessung kann die monostatische Sendeempfangseinheit SES durch eine bistatische Sendeempfangseinheit SES' gemäß Figur 7 ersetzt werden.

Typische Frequenzen für die Vorrichtung zur Abstandsmessung liegen bei 24, 60 oder 76 GHz.

Der Abstandsmeßbereich liegt typischerweise zwischen 0 und 500m.

Bei gleichzeitigem Betrieb mehrerer Abstandsmeßvorrichtungen durch mehrere Benutzer können sich Probleme ergeben. Strahlt eine erste Abstandsmeßvorrichtung in den Empfangsbereich einer zweiten Abstandsmeßvorrichtung, so führt dies zu Störungen, welche auch in den Nebenkeulen stärkere Empfangspegel erzielen, als die vergleichsweise schwachen Radarechos. Zur Unterdrückung dieser Störungen kann ein willkürlich gewählter irregulärer Modulationssignalverlauf vorgegeben werden.

Weitere Möglichkeiten zur Verbesserung der Störsicherheit sind:

1. Das vom Modulator MOD stammende Modulationssignal kann nach einem festen Muster verändert werden.

2. Das vom Modulator MOD stammende Modulationssignal kann mit Hilfe eines Zufallsgenerators verändert werden.

3. Es kann die Umschaltung des Verlaufs der modulierenden Spannung nach "Absprache" mit dem Störsender, der seinerseits ebenfalls gestört wird, vorgenommen werden. Geeignete Funktionen für unterschiedliche Benutzer sind solche, die möglichst wenig miteinander korrelieren.

**Patentansprüche**

1.    Vorrichtung zur Abstandsmessung,

   -    bei der eine Signalquelle (SQ) vorgesehen ist, die ein frequenzmoduliertes Signal ($S_{VCO}$) erzeugt,
   -    bei der eine Sende-Empfangseinheit (SES, SES') vorgesehen ist, die mit der Signalquelle (SQ) verbunden ist,
   -    **dadurch gekennzeichnet**, daß ein Oberflächenwellenelement (OFW) vorgesehen ist, das aus dem frequenzmodulierten Signal ($S_{VCO}$) ein um eine Verzögerungsdauer ($\tau$) verzögertes Signal ($S_{VCO}(t-\tau)$) erzeugt,
   -    dieses Oberflächenwellenelement so ausgebildet ist, daß die Verzögerungsdauer ($\tau$) damit so eingestellt werden kann, daß der Betrag der Differenz zwischen der Verzögerungsdauer und vorgegebenen Signallaufzeiten kleiner ist als eine durch die Signalquelle vorgegebene Kohärenzlänge,
   -    ein Mischer (MI) vorgesehen ist zum Mischen des empfangenen Signals ($S_E$) mit dem verzögerten Signal ($S_{VCO}(t-\tau)$) und
   -    eine Auswerteeinheit (AE) vorhanden ist, die mit diesem Mischer (MI) verbunden ist und die dafür eingerichtet ist, einem zugeführten Frequenzsignal einen zu messenden Abstand zuzuordnen.

2.    Vorrichtung zur Abstandsmessung,

   -    bei der eine Signalquelle (SQ) vorgesehen ist, die ein frequenzmoduliertes Signal ($S_{VCO}$) erzeugt,
   -    bei der eine Sende-Empfangseinheit (SES, SES') vorgesehen ist, die mit der Signalquelle (SQ) verbunden ist,
   -    bei der ein erster Mischer (MI1) vorgesehen ist zum Mischen des empfangenen Signals ($S_E$) mit dem frequenzmodulierten Signal ($S_{VCO}$),
   -    **dadurch gekennzeichnet**, daß ein Oberflächenwellenelement (OFW) vorgesehen ist, das aus dem frequenzmodulierten Signal ($S_{VCO}$) ein um eine Verzögerungsdauer ($\tau$) verzögertes Signal ($S_{VCO}(t-\tau)$) erzeugt,

- dieses Oberflächenwellenelement so ausgebildet ist, daß die Verzögerungsdauer ($\tau$) damit so eingestellt werden kann, daß der Betrag der Differenz zwischen der Verzögerungsdauer und vorgegebenen Signallaufzeiten kleiner ist als eine durch die Signalquelle vorgegebene Kohärenzlänge,

- ein zweiter Mischer (MI2) vorgesehen ist zum Mischen des verzögerten Signals ($S_{VCO}(t-\tau)$) mit dem frequenzmodulierten Signal ($S_{VCO}$) und

- eine Auswerteeinheit (AE) vorhanden ist, die mit den Mischern (MI1, MI2) verbunden ist und die dafür eingerichtet ist, aus einem von dem zweiten Mischer zugeführten Signal einen Korrekturwert zu errechnen und unter Berücksichtigung dieses Korrekturwertes einem von dem ersten Mischer zugeführten Frequenzsignal einen zu messenden Abstand zuzuordnen.

**3.** Vorrichtung nach Anspruch 1 oder 2,

- bei der das Oberflächenwellenelement (OFW) mehrere Ausgänge aufweist, an denen das verzögerte Signal mit verschiedenen Verzögerungsdauern ($\tau_1...\tau_n$) abgreifbar ist, und

- bei der ein Umschalter (S) vorgesehen ist, der wahlweise einen der Ausgänge mit dem zum Mischen des verzögerten Signals ($S_{VCO}(t-\tau)$) vorgesehenen Mischer (MI, MI2) verbindet.

**4.** Vorrichtung nach Anspruch 1 oder 3, rückbezogen auf Anspruch 1,

- bei der zwischen der Signalquelle (SQ) und der Sende-Empfangseinheit (SES, SES') ein Mittel zum Hochmischen (UM) des frequenzmodulierten Signals ($S_{VCO}$) vorgesehen ist und

- bei der zwischen der Sende-Empfangseinheit (SES, SES') und dem Mischer (MI) ein Mittel zum Herabmischen (UM) des empfangenen Signals vorgesehen ist.

**5.** Vorrichtung nach Anspruch 2 oder 3, rückbezogen auf Anspruch 2,
bei der zwischen der Signalquelle (SQ) und der Sende-Empfangseinheit (SES, SES') ein Mittel zum Hochmischen (UM) des frequenzmodulierten Signals vorgesehen ist.

**6.** Vorrichtung nach Anspruch 2 oder 3, rückbezogen auf Anspruch 2,
bei der zwischen der Signalquelle (SQ) und dem Oberflächenwellenelement (OFW) ein Mittel zum Herabmischen (LO, MI3) des frequenzmodulierten Signals vorgesehen ist.

**7.** Vorrichtung nach einem der Ansprüche 1 bis 6,

- bei der mindestens ein weiteres Oberflächenwellenelement (OFW', OFW") vorgesehen ist, das aus dem frequenzmodulierten Signal ($S_{VCO}$) ein um eine Verzögerungsdauer verzögertes Signal erzeugt, und

- bei der zwei Umschalter (S1, S2) vorhanden sind, die jeweils eines der Oberflächenwellenelemente zwischen die Signalquelle (SQ) und den zum Mischen mit dem verzögerten Signal vorgesehenen Mischer (MI, MI2) schalten.

**8.** Vorrichtung nach einem der Ansprüche 1 bis 6,

- bei der mindestens ein weiteres Oberflächenwellenelement (OFW', OFW") vorgesehen ist, das aus dem frequenzmodulierten Signal ($S_{VCO}$) ein um eine Verzögerungsdauer verzögertes Signal erzeugt, und

- bei der jedem Oberflächenwellenelement ein zum Mischen mit dem verzögerten Signal vorgesehener und mit der Auswerteeinheit verbundener Mischer zugeordnet ist.

**Claims**

**1.** Apparatus for distance measurement,

- in which a signal source (SQ) is provided which produces a frequency-modulated signal ($S_{VCO}$),

- in which a transmitting/receiving unit (SES, SES') is provided which is connected to the signal source (SQ),

- characterized in that a surface-acoustic wave element (SAW) is provided which uses the frequency-modulated signal ($S_{VCO}$) to produce a signal ($S_{VCO}(t-\tau)$) delayed by a delay period ($\tau$),

- this surface-acoustic wave element is designed such that the delay period ($\tau$) can be set such that the magnitude of the difference between the delay period and predetermined signal delay times is less than a coherence length predetermined by the signal source,

- a mixer (MI) is provided for mixing the received signal ($S_E$) with the delayed signal ($S_{VCO}(t-\tau)$), and

- an evaluation unit (AE) is provided which is connected to this mixer (MI) and is set up in order to assign a distance to be measured to a supplied frequency signal.

**2.** Apparatus for distance measurement,

- in which a signal source (SQ) is provided which produces a frequency-modulated signal ($S_{VCO}$),
- in which a transmitting/receiving unit (SES, SES') is provided which is connected to the signal source (SQ),
- in which a first mixer (MI1) is provided for mixing the received signal ($S_E$) with the frequency-modulated signal ($S_{VCO}$),
- characterized in that a surface-acoustic wave element (SAW) is provided which uses the frequency-modulated signal ($S_{VCO}$) to produce a signal ($S_{VCO}(t-\tau)$) delayed by a delay period ($\tau$),
- this surface-acoustic wave element is designed such that the delay period ($\tau$) can be set such that the magnitude of the difference between the delay period and predetermined signal delay times is less than a coherence length predetermined by the signal source,
- a second mixer (MI2) is provided for mixing the delayed signal ($S_{VCO}(t-\tau)$) with the frequency-modulated signal ($S_{VCO}$), and
- an evaluation unit (AE) is provided which is connected to the mixers (MI1, MI2) and is set up in order to calculate a correction value from a signal supplied by the second mixer and, taking this correction value into account, to assign a distance to be measured to a frequency signal supplied by the first mixer.

3. Apparatus according to Claim 1 or 2,

- in which the surface-acoustic wave element (SAW) has a plurality of outputs at which the delayed signal can be tapped off with various delay periods ($\tau_1...\tau_n$), and
- in which a changeover switch (S) is provided which selectively connects one of the outputs to the mixer (MI, MI2) which is provided for mixing the delayed signal ($S_{VCO}(t-\tau)$).

4. Apparatus according to Claim 1 or 3, and referring back to Claim 1,

- in which a means for up-mixing (UM) the frequency-modulated signal ($S_{VCO}$) is provided between the signal source (SQ) and the transmitting/receiving unit (SES, SES'), and
- in which a means for down-mixing (DM) the received signal is provided between the transmitting/receiving unit (SES, SES') and the mixer (MI).

5. Apparatus according to Claim 2 or 3, and referring back to Claim 2,

- in which a means for up-mixing (UM) the frequency-modulated signal is provided between the signal source (SQ) and the transmitting/receiving unit (SES, SES').

6. Apparatus according to Claim 2 or 3, and referring back to Claim 2,

- in which a means for down-mixing (LO, MI3) the frequency-modulated signal is provided between the signal source (SQ) and the surface-acoustic wave element (SAW).

7. Apparatus according to one of Claims 1 to 6,

- in which at least one further surface-acoustic wave element (SAW', SAW'') is provided which produces a signal delayed by a delay period from the frequency-modulated signal ($S_{VCO}$), and
- in which two changeover switches (S1, S2) are provided, which each switch one of the surface-acoustic wave elements between the signal source (SQ) and the mixer (MI, MI2) which is provided for mixing with the delayed signal.

8. Apparatus according to one of Claims 1 to 6,

- in which at least one further surface-acoustic wave element (SAW', SAW'') is provided, which produces a signal delayed by a delay period from the frequency-modulated signal ($S_{VCO}$), and
- in which each surface-acoustic wave element is assigned a mixer which is intended for mixing with the delayed signal and is connected to the evaluation unit.

**Revendications**

1. Dispositif de télémétrie,

- comprenant une source de signal (SQ) qui produit un signal à modulation de fréquence ($S_{VCO}$)
- comprenant une unité émission-réception (SES, SES') qui est reliée à la source de signal (SQ),
- caractérisé en ce qu'il comporte un élément à ondes de surface (OFW) qui produit à partir du signal à modulation de fréquence ($S_{VCO}$) un signal ($S_{VCO}(t-\tau)$) retardé d'un temps de retard ($\tau$),
- en ce que cet élément à ondes de surface est réalisé de telle sorte qu'il permette de régler le temps de retard ($\tau$) de façon à ce que la valeur de la différence entre le temps de retard et les temps de propagation prédéfinis des signaux soit inférieure à une longueur de cohérence prédéfinie par la source de signal,

- en ce qu'il comporte un mélangeur (MI) pour mélanger le signal reçu (SE) avec le signal retardé ($S_{VCO}(t-\tau)$) et
- en ce qu'il existe une unité d'évaluation (AE) qui est reliée à ce mélangeur (MI) et qui est adaptée à attribuer à un signal de fréquence amené une distance à mesurer.

2. Dispositif de télémétrie,

- comprenant une source de signal (SQ) qui produit un signal à modulation de fréquence ($S_{VCO}$)
- comprenant une unité émission-réception (SES, SES') qui est reliée à la source de signal (SQ),
- comprenant un premier mélangeur (MI1) pour mélanger le signal reçu ($S_E$) avec le signal à modulation de fréquence ($S_{VCO}$),
- caractérisé en ce qu'il comporte un élément à ondes de surface (OFW) qui produit à partir du signal à modulation de fréquence ($S_{VCO}$) un signal ($S_{VCO}(t-\tau)$) retardé d'un temps de retard ($\tau$),
- en ce que cet élément à ondes de surface est réalisé de telle sorte qu'il permette de régler le temps de retard ($\tau$) de façon à ce que la valeur de la différence entre le temps de retard et les temps de propagation prédéfinis des signaux soit inférieure à une longueur de cohérence prédéfinie par la source de signal,
- en ce qu'il comporte un second mélangeur (M12) pour mélanger le signal retardé ($S_{VCO}(t-\tau)$) avec le signal à modulation de fréquence ($S_{VCO}$) et
- en ce qu'il existe une unité d'évaluation (AE) qui est reliée aux mélangeurs (MI1, M12) et qui est adaptée à calculer une valeur de correction à partir d'un signal amené par le second mélangeur et, en tenant compte de cette valeur de correction, à attribuer à un signal de fréquence amené par le premier mélangeur une distance à mesurer.

3. Dispositif selon la revendication 1 ou 2,

- dans lequel l'élément à ondes de surface (OFW) comporte plusieurs sorties auxquelles le signal retardé peut être prélevé avec différents temps de retard ($\tau_1...\tau_n$) et
- dans lequel existe un commutateur (S) qui relie au choix l'une des sorties au mélangeur (MI, M12) prévu pour mélanger le signal retardé ($S_{VCO}(t-\tau)$).

4. Dispositif selon la revendication 1 ou 3, rapporté à la revendication 1,

- comprenant entre la source de signal (SQ) et l'unité émission-réception (SES, SES') un moyen de mélange vers le haut (UM) du signal à modulation de fréquence ($S_{VCO}$) et
- comprenant entre l'unité émission-réception (SES, SES') et le mélangeur (MI) un moyen de mélange vers le bas (UM) du signal reçu.

5. Dispositif selon la revendication 2 ou 3, rapporté à la revendication 2,

comprenant entre la source de signal (SQ) et l'unité émission-réception (SES, SES') un moyen de mélange vers le haut (UM) du signal à modulation de fréquence.

6. Dispositif selon la revendication 2 ou 3, rapporté à la revendication 2,

comprenant entre la source de signal (SQ) et l'élément à ondes de surface (OFW) un moyen de mélange vers le bas (LO, M13) du signal à modulation de fréquence.

7. Dispositif selon l'une des revendications 1 à 6,

- comprenant au moins un autre élément à ondes de surface (OFW', OFW") qui produit à partir du signal à modulation de fréquence ($S_{VCO}$) un signal retardé d'un temps de retard et
- comprenant deux commutateurs (S1, S2), qui intercalent chacun l'un des éléments à ondes de surface entre la source de signal (SQ) et le mélangeur (MI, M12) prévu pour le mélange avec le signal retardé.

8. Dispositif selon l'une des revendications 1 à 6,

- comprenant au moins un autre élément à ondes de surface (OFW', OFW") qui produit à partir du signal à modulation de fréquence ($S_{VCO}$) un signal retardé d'un temps de retard et
- dans lequel un mélangeur prévu pour le mélange avec le signal retardé et relié à l'unité d'évaluation est attribué à chaque élément à ondes de surface.

FIG 1

FIG 2

FIG 3

FIG 4

## FIG 5

SES
A
MO
L

SVCO
VCO

ZIR
SE
MI1
TP1

VCO

SMWO
LO
UM

MI3
VS

MOD
SQ

OFW
$S_{VCO}(t-\tau_1...\tau_n)$

$\tau_1......\tau_n$
S
MI2
TP2

AE'

SVCO

## FIG 6

LO
MIU
UM

## FIG 7

SES'
SA
EA